# FASCICULE DE BREVET EUROPEEN

(11) **EP 4 077 420 B1**
(45) Date de publication et mention de la délivrance du brevet: **20.08.2025**
(21) Numéro de dépôt: 20845195.5
(22) Date de dépôt: 14.12.2020
(51) Int. Cl.: C08F 210/02, C08F 236/06, C08F 4/52, C07F 3/02

(54) **COMPOSE DIORGANOMAGNESIEN**
DIORGANOMAGNESIUMVERBINDUNG
DIORGANOMAGNESIUM COMPOUND

(30) Priorité: 17.12.2019 FR 1914627
(43) Date de publication de la demande: 26.10.2022
(73) Titulaire: COMPAGNIE GENERALE DES ETABLISSEMENTS MICHELIN, 63000 Clermont-Ferrand (FR)
(72) Inventeur: THUILLIEZ, Julien, 63040 CLERMONT-FERRAND Cedex 9 (FR); NGO, Robert, 63040 CLERMONT-FERRAND Cedex 9 (FR); JEAN-BAPTISTE-DIT-DOMINIQUE, François, 63040 CLERMONT-FERRAND Cedex 9 (FR)
(74) Mandataire: M.F.P. Michelin
(86) Numéro de dépôt international: PCT/FR2020/052428
(87) Numéro de publication internationale: WO 2021/123591

(56) Documents cités:
- EP-A1- 2 797 969
- EP-A1- 3 387 067
- WO-A2-2007/128601
- US-A- 4 124 751

## Description

Le domaine de la présente invention est celui des composés organomagnésiens destinés à être utilisés comme co-catalyseurs dans des systèmes catalytiques à base de métallocènes de terre rare utilisés dans la préparation de polyoléfines, en particulier de copolymères d'oléfine et de diène conjugué.

Des systèmes catalytiques à base de métallocènes de terre rare sont décrits par exemple dans les demandes de brevet EP 1 092 731, WO 2004035639, WO 2007054224 , EP2797969 et

WO 2018224776. Ils permettent la synthèse de polyoléfines, en particulier de copolymères d'oléfine et de 1,3-diène. Ils sont également utilisés dans la préparation de copolymères d'éthylène et de 1,3-butadiène fonctionnel, comme le décrit le document WO 2018224776. Dans ces systèmes catalytiques, le métallocène est activé par un co-catalyseur qui fait partie du système catalytique. A titre de co-catalyseur peut convenir un organomagnésien, un organoaluminique ou un organolithien. Lorsque le co-catalyseur est un organomagnésien, il est typiquement un chlorure d'un organomagnésien ou un diorganomagnésien dans lesquels l'atome de magnésium est lié à deux groupes aliphatiques, comme le dibutylmagnésium, le butyléthymagnésium et le butyloctylmagnésium.

La Demanderesse a découvert un nouveau composé diorganomagnésien asymétrique qui présente une liaison magnésium-carbone, lequel carbone est un atome de carbone constitutif d'un noyau benzénique spécifique. Le nouveau composé diorganomagnésien asymétrique utilisé comme co-catalyseur d'un système catalytique à base d'un métallocène de terre rare permet d'augmenter le taux de fonction dans la synthèse de polymère fonctionnel préparé en présence de systèmes catalytiques à base de métallocènes de terre rare. Même, selon certains modes de réalisation de l'invention, l'activité catalytique du système catalytique est améliorée.

Ainsi, un premier objet de l'invention est un composé diorganomagnésien asymétrique de formule

R^{B}-Mg-R^{A}
R^{B} étant différent de R^{A},
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
R^{A} étant un alkyle, un cycloalkyle, ou un benzyle, substitué ou non,
lequel composé diorganomagnésien est différent du n-butylmésitylmagnésium.

L'invention concerne aussi un procédé de préparation d'un composé diorganomagnésien asymétrique de formule R^{B}-Mg-R^{A} qui comprend la mise en contact d'un composé organométallique de formule R^{A}M avec un organomagnésien de formule R^{B}-Mg-X et la réaction du composé organométallique de formule R^{A}M et de l'organomagnésien de formule R^{B}-Mg-X , M représentant un atome de lithium, de sodium ou de potassium, X représentant un groupe partant,
R^{B} étant différent de R^{A},
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
R^{A} étant un alkyle, un cycloalkyle ou un benzyle, substitué ou non,
lequel composé diorganomagnésien est différent du n-butylmésitylmagnésium.

### Description détaillée de l'invention

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

L'abréviation "pce" signifie parties en poids pour cent parties d'élastomère (du total des élastomères si plusieurs élastomères sont présents).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse.

Par l'expression « à base de » utilisée pour définir les constituants du système catalytique, on entend le mélange de ces constituants, ou le produit de la réaction d'une partie ou de la totalité de ces constituants entre eux.

Le composé conforme à l'invention de formule (I) a pour caractéristique essentielle d'être un composé diorganomagnésien, dit asymétrique et dans la présente invention dénommé composé diorganomagnésien asymétrique, puisque les deux groupes représentés par les symboles R^{B} et R^{A} sont différents l'un de l'autre.

R^{B}-Mg-R^{A} (I).

Le groupe représenté par le symbole R^{A} est un alkyle, un cycloalkyle ou un benzyle, substitué ou non. L'alkyle représenté par le symbole R^{A} peut être linéaire ou ramifié, de préférence linéaire, et peut contenir de 1 à 12 atomes de carbone, de préférence 2 à 10 atomes de carbone, de manière plus préférentielle de 2 à 8 atomes de carbone. Le cycloalkyle représenté par le symbole R^{A} peut contenir 4 à 12 atomes de carbone. De préférence, R^{A} représente un alkyle linéaire ayant de 2 à 8 atomes de carbone. Mieux R^{A} représente n-butyle.

Le groupe représenté par le symbole R^{B} a pour caractéristique essentielle de comprendre un noyau benzénique substitué par l'atome de magnésium. Les deux atomes de carbone du noyau benzénique de R^{B} en ortho du magnésium portent un substituant, identique ou différent. Alternativement l'un des deux atomes de carbone du noyau benzénique de R^{B} en ortho du magnésium peut porter un substituant, l'autre atome de carbone du noyau benzénique de R^{B} en ortho du magnésium peut former un cycle. Le substituant est un méthyle, un éthyle ou un isopropyle. Dans le cas où l'un des 2 atomes de carbone du noyau benzénique de R^{B} en ortho du magnésium est substitué par un isopropyle, de préférence le deuxième atome de carbone du noyau benzénique de R^{B} en ortho du magnésium n'est pas substitué par un isopropyle. De préférence, les atomes de carbone du noyau benzénique de R^{B} en ortho du magnésium sont substitués par un méthyle ou un éthyle. De manière plus préférentielle, les atomes de carbone du noyau benzénique de R^{B} en ortho du magnésium sont substitués par un méthyle.

Selon l'un quelconque des modes de réalisation de l'invention, le groupe représenté par le symbole R^{B} est différent d'un groupe mésityle lorsque R^{A} est n-butyle.

Selon un mode de réalisation préférentiel, le composé diorganomagnésien asymétrique répond à la formule (II) dans laquelle R^{A} est un alkyle, un cycloalkyle ou un benzyle, substitué ou non, R₁ et R₅, identiques ou différents, représentent un méthyle ou éthyle et R₂, R₃ et R₄, identiques ou différents, représentent un atome d'hydrogène ou un alkyle, étant bien entendu que R^{B} est différent d'un groupe mésityle lorsque R^{A} est n-butyle. De préférence, R₁ et R₅ représentent un méthyle. De préférence, R₂ et R₄ représentent un atome hydrogène.

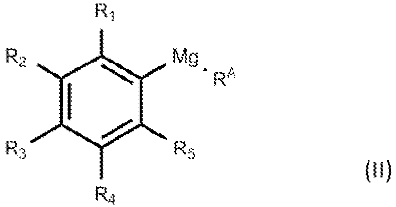

Selon une variante préférentielle, R₁, R₃ et R₅ sont identiques. Selon une variante plus préférentielle, R₂ et R₄ représentent un hydrogène et R₁, R₃ et R₅ sont identiques. Dans une variante davantage préférentielle, R₂ et R₄ représentent un hydrogène et R₁, R₃ et R₅ représentent un méthyle.

Le composé diorganomagnésien asymétrique conforme à l'invention peut être préparé par un procédé, autre objet de l'invention, qui comprend les étapes suivantes :
- la mise en contact d'un composé organométallique de formule R^{A}M avec un organomagnésien de formule R^{B}-Mg-X,
- la réaction du composé organométallique de formule R^{A}M et de l'organomagnésien de formule R^{B}-Mg-X,

M représentant un atome de lithium, de sodium ou de potassium, X représentant un groupe partant, R^{B} et R^{A} étant tels que définis précédemment.

On entend par groupe partant un groupe partant tel que défini par IUPAC. A titre de groupe partant, on peut citer tout particulièrement les atomes d'halogène choisi dans le groupe constitué par le chlore, le fluor, le brome et l'iode. X est préférentiellement un atome d'halogène. X est plus préférentiellement un atome de brome ou un atome de chlore. X est encore plus préférentiellement un atome de brome.

De préférence, M représente un atome de lithium, auquel cas l'organométallique de formule R^{A}M est un organolithien.

La réaction de l'organolithien et de l'organomagnésien est conduite typiquement dans un éther tel que le diéthyléther, le dibutyléther, le tétrahydrofurane, le méthyltétrahydrofurane. La réaction est conduite aussi typiquement à une température allant de 0°C à 60°C. La mise en contact est réalisée de préférence à une température comprise entre 0°C et 23°C.

La mise en contact du composé organométallique de formule R^{A}M avec l'organomagnésien de formule R^{B}-Mg-X se fait préférentiellement par l'ajout d'une solution du composé organométallique R^{A}M à une solution de l'organomagnésien R^{B}-Mg-X. La solution du composé organométallique R^{A}M est généralement une solution dans un solvant hydrocarboné, de préférence n-hexane, cyclohexane ou méthylcyclohexane, la solution de l'organomagnésien R^{B}-Mg-X est généralement une solution dans un éther, de préférence le diéthyléther ou le dibutyléther. De préférence, les concentrations respectives des solutions du composé organométallique et de l'organomagnésien R^{A}M et R^{B}-Mg-X sont respectivement de 0.01 à 1 mol/l et de 1 à 5 mol/l. De manière plus préférentielle, les concentrations respectives des solutions du composé organométallique et de l'organomagnésien R^{A}M et R^{B}-Mg-X sont respectivement de 0.05 à 0.2 mol/l et de 2 à 3 mol/l.

Comme toute synthèse faite en présence de composés organométalliques, la mise en contact et la réaction ont lieu dans des conditions anhydres sous atmosphère inerte. Typiquement, les solvants et les solutions sont utilisés sous azote ou argon anhydre. Les différentes étapes du procédé sont conduites généralement sous agitation.

Une fois le diorganomagnésien asymétrique formé, il est récupéré généralement en solution après filtration conduite sous atmosphère inerte et anhydre. La solution de diorganomagnésien asymétrique est typiquement stockée avant son utilisation dans des récipients hermétiques, par exemple des bouteilles capsulées, à une température comprise entre -25°C et 23°C.

Comme tout composé organomagnésien, le composé diorganomagnésien R^{B}-Mg-R^{A} conforme à l'invention peut se présenter sous la forme d'une entité monomère (R^{B}-Mg-R^{A})₁ ou sous la forme d'une entité polymère (R^{B}-Mg-R^{A})ₚ, p étant un nombre entier supérieur à 1, notamment dimère (R^{B}-Mg-R^{A})₂. Par ailleurs, qu'il soit sous la forme d'une entité monomère ou polymère, il peut également se présenter sous la forme d'une entité coordinée à une ou plusieurs molécules d'un solvant, de préférence d'un éther tel que le diéthyléther, le tétrahydrofurane ou le méthyltétrahydrofurane.

Le composé diorganomagnésien asymétrique conforme à l'invention est tout particulièrement destiné à être utilisé comme co-catalyseur dans un système catalytique comprenant un complexe organométallique et utile à la polymérisation ou la copolymérisation d'oléfines ou de diènes. Le complexe organométallique est typiquement un métallocène ou un hémimétallocène de terre rare. Le composé diorganomagnésien asymétrique a pour rôle d'activer le complexe organométallique vis-à-vis de la réaction de polymérisation, notamment dans la réaction d'amorçage de polymérisation. Il peut se substituer au co-catalyseur des systèmes catalytiques décrits par exemple dans les documents EP 1092731 A1, WO 2004035639 A1, WO 2005028526 A1, WO2007045223 A2, WO2007045224 A2. Il peut également se substituer au co-catalyseur des systèmes catalytiques dit préformés en présence d'un monomère et décrits par exemple dans les documents WO 2017093654 A1, WO 2018020122 A1, WO 2018100279 A1.

Utilisé comme co-catalyseur dans le système catalytique, le composé diorganomagnésien asymétrique permet d'augmenter l'activité catalytique du système catalytique dans la synthèse de polymères ainsi que d'augmenter le rendement de la réaction de fonctionnalisation de ces polymères. Les polymères sont typiquement des copolymères de diènes et d'oléfines. A titre d'oléfines, on peut citer particulièrement l'éthylène et les α-oléfines, notamment celles ayant 3 à 18 atomes de carbone. A titre de diènes conviennent tout particulièrement les 1,3-diènes, plus particulièrement les 1,3-diènes ayant 4 à 24 atomes de carbone tel que le 1,3-butadiène, l'isoprène, le myrcène, le β-farnésène et leurs mélanges.

En résumé, l'invention est mise en œuvre avantageusement selon l'un quelconque des modes de réalisation suivants 1 à 17 :
Mode 1 : Composé diorganomagnésien asymétrique de formule (I)

   R^{B}-Mg-R^{A} (I)

   R^{B} étant différent de R^{A},
   R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
   R^{A} étant un alkyle, un cycloalkyle ou un benzyle, substitué ou non,
   lequel composé diorganomagnésien est différent du n-butylmésitylmagnésium.
Mode 2 : Composé diorganomagnésien asymétrique selon le mode 1 dans lequel si l'un des 2 atomes de carbone du noyau benzénique de R^{B} en ortho du magnésium est substitué par un isopropyle, le deuxième atome de carbone du noyau benzénique de R^{B} en ortho du magnésium n'est pas substitué par un isopropyle.
Mode 3 : Composé diorganomagnésien asymétrique selon le mode 1 ou 2 dans lequel les atomes de carbone du noyau benzénique de R^{B} en ortho du magnésium sont substitués par un méthyle ou un éthyle, de préférence un méthyle.
Mode 4 : Composé diorganomagnésien asymétrique selon l'un quelconque des modes 1 à 3 dans lequel le diorganomagnésien est de formule (II) 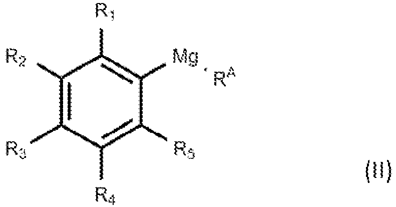 dans laquelle
   R₁ et R₅ représentent un méthyle ou un éthyle, de préférence un méthyle,
   R₂, R₃ et R₄, identiques ou différents, représentent un atome d'hydrogène ou un alkyle,
   R^{A} est un alkyle, un cycloalkyle ou un benzyle, substitué ou non.
Mode 5 : Composé diorganomagnésien asymétrique selon le mode 4 dans lequel R1, R3 et R5 sont identiques.
Mode 6 : Composé diorganomagnésien asymétrique selon le mode 4 ou 5 dans lequel R1, R3 et R5 sont méthyle.
Mode 7 : Composé diorganomagnésien asymétrique selon l'un quelconque des modes 4 à 6 dans lequel R2 et R4 représentent un atome d'hydrogène.
Mode 8 : Composé diorganomagnésien asymétrique selon l'un quelconque des modes 1 à 7 dans lequel R^{A} représente un alkyle ayant de 1 à 12 atomes de carbone.
Mode 9 : Composé diorganomagnésien asymétrique selon l'un quelconque des modes 1 à 8 dans lequel R^{A} représente un alkyle ayant de 2 à 10 atomes de carbone.
Mode 10 : Composé diorganomagnésien asymétrique selon l'un quelconque des modes 1 à 9 dans lequel R^{A} représente un alkyle ayant de 2 à 8 atomes de carbone.
Mode 11 : Composé diorganomagnésien asymétrique selon l'un quelconque des modes 1 à 10 dans lequel R^{A} représente un alkyle linéaire.
Mode 12 : Composé diorganomagnésien asymétrique selon l'un quelconque des modes 1 à 11 dans lequel R^{A} représente n-butyle.
Mode 13 : Procédé de préparation d'un composé diorganomagnésien asymétrique de formule R^{B}-Mg-R^{A} qui comprend la mise en contact d'un composé organométallique de formule R^{A}M avec un organomagnésien de formule R^{B}-Mg-X et la réaction du composé organométallique de formule R^{A}M et de l'organomagnésien de formule R^{B}-Mg-X,
   M représentant un atome de lithium, de sodium ou de potassium,
   X représentant un groupe partant,
   R^{B} et R^{A} étant tels que définis selon l'un quelconque des modes 1 à 12,
   lequel composé diorganomagnésien est différent du n-butylmésitylmagnésium.
Mode 14 : Procédé selon le mode 13 dans lequel X est un atome d'halogène.
Mode 15 : Procédé selon l'un quelconque des modes 13 à 14 dans lequel X est un atome de brome ou un atome de chlore.
Mode 16 : Procédé selon l'un quelconque des modes 13 à 15 dans lequel X est un atome de brome.
Mode 17 : Procédé selon l'un quelconque des modes 13 à 16 dans lequel M représente un atome de lithium.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples de réalisation de l'invention

### Matières premières :

Le bromure de phényl magnésium en solution dans le diéthyléther à 3 mol/L, le bromure de mésityl magnésium en solution dans le diéthyléther à 1 mol/L, le bromure de triisopropylphénylmagnésium en solution dans le tétrahydrofurane à 0.5 mol/L sont obtenus chez Sigma-Aldrich et utilisés sans purification préalable.

### Synthèse des diorganomagnésiens :

Caractérisation des diorganomagnésiens synthétisés :
La structure des diorganomagnésiens est caractérisée par résonance magnétique nucléaire RMN 1D ¹H, ¹H-¹³C HSQC ((Heteronuclear Single Quantum Coherence), ¹H-¹³C HMBC (Heteronuclear Multiple-Bond Correlation). Le diorganomagnésien est analysé avec son solvant de synthèse et le THF-D₄ est ajouté à la solution pour réaliser le « lock » de la RMN.

Mode opératoire des synthèses des diorganomagnésiens :
Synthèse de butylphénylmagnésium (PhMgBu) : exemple non conforme à l'invention 1.2 mL de phényl-Mg-Br à 3 mol/L dans le diéthylether est introduit dans une bouteille steinie préalablement barbotée. 57 mL de n-BuLi à 0.06 mol/L dans le méthylcyclohexane (MCH), sont ensuite ajoutés à 23°C. Un précipité blanc se forme et la bouteille est laissée sous agitation une nuit à 23°C sur un dispositif qui secoue la bouteille, dit secoueuse. Le précipité est filtré à l'aide d'un filtre à 0.45 µm lors du transfert de la phase liquide vers une autre bouteille steinie préalablement barbotée. La formation et la structure du diorganomagnésien asymétrique sont confirmées par les analyses RMN, notamment par un signal de déplacement chimique de 6.6ppm à 6.55ppm (protons aromatiques du phényle) et un signal de déplacement chimique de -1ppm à -0.45ppm (protons du butyle).

Synthèse de butylmésitylmagnésium (MesMgBu) : exemple conforme à l'invention 3.6 mL de mésityl-Mg-Br à 1 mol/L dans le diéthylether sont introduits dans une bouteille steinie préalablement barbotée. 57 mL de n-BuLi à 0.06 mol/L dans le MCH, sont ensuite ajoutés à 23°C. Un précipité blanc se forme et la bouteille est laissée sous agitation une nuit à 23°C sur une secoueuse. Le précipité est filtré à l'aide d'un filtre à 0.45 µm lors du transfert de la phase liquide vers une autre bouteille steinie préalablement barbotée. La formation et la structure du diorganomagnésien asymétrique sont confirmées par les analyses RMN, notamment par un signal de déplacement chimique à 6.5 ppm (proton du noyau benzénique en méta du magnésium) et un signal de déplacement chimique à -0.5 ppm (protons en alpha du Mg sur la chaîne nbutyle).

Synthèse de butyltriisopropylphénylmagnésium ((iPr)₃PhMgBu) : exemple non conforme à l'invention
3 mL de triisopropylphenyl-Mg-Br à 0.5mol/L dans le tétrahydrofurane (THF) sont introduits dans une bouteille steinie préalablement barbotée. 25 mL de n-BuLi à 0.06mol/L dans le MCH sont ensuite ajoutés. Un léger précipité blanc se forme et la bouteille est laissée à température ambiante sur une secoueuse, une nuit.

Le composé est utilisé directement en polymérisation.

Copolymérisation de l'éthylène et du 1,3-butadiène :
Le métallocène [{Me₂SiFlu₂Nd(µ-BH₄)₂Li(THF)}]₂ est préparé selon le mode opératoire décrit dans la demande de brevet WO 2007054224.

Le butyloctylmagnésium BOMAG (20% dans l'heptane, à 0,88 mol L⁻¹) provient de Chemtura et est stocké dans un tube de Schlenk sous atmosphère inerte.

L'éthylène, de qualité N35, provient de la société Air Liquide et est utilisé sans purification préalable.

Le 1,3-butadiène est purifié sur gardes d'alumine.

Le (N,N-diméthyl-3-aminopropyl)méthyldiméthoxysilane est obtenu chez ABCR et utilisé sans purification préalable.

Le solvant méthylcyclohexane (MCH) provenant de chez BioSolve est séché et purifié sur colonne d'alumine dans une fontaine à solvant provenant de chez mBraun et utilisée en atmosphère inerte.

Toutes les réactions sont effectuées en atmosphère inerte.

Les systèmes catalytiques sont préparés selon le procédé divulgué dans la demande de brevet WO 2007054224 et décrit ci-après :
Toutes les polymérisations et les réactions de fonctionnalisation de copolymères de l'éthylène et du 1,3-butadiène sont effectuées dans un réacteur à cuve jetable en verre de 500 mL (flacons Schott) muni d'une pale d'agitation en acier inoxydable. Le contrôle de la température est assuré grâce à un bain d'huile thermostaté connecté à une double enveloppe en polycarbonate. Ce réacteur possède toutes les entrées ou sorties nécessaires aux manipulations.

Dans un réacteur en verre de 500 mL contenant du MCH, on ajoute le co-catalyseur, puis le métallocène. La quantité de co-catalyseur introduite est de 40 mg, le ratio entre le nombre de mole de Mg du co-catalyseur et le nombre de mole de Nd du métallocène est de 4.5. La durée d'activation est de 10 minutes, la température de réaction est de 80 °C.

La polymérisation est conduite à 80°C et à une pression initiale de 4 bars absolue dans le réacteur en verre de 500 ml contenant 300 ml de solvant de polymérisation, le méthylcyclohexane, le système catalytique. Le 1,3-butadiène et l'éthylène sont introduits sous la forme d'un mélange gazeux contenant 20% molaire de 1,3-butadiène. La réaction de polymérisation est stoppée par refroidissement, dégazage du réacteur et ajout de méthanol. Le copolymère est récupéré puis séché. La masse pesée permet de déterminer l'activité catalytique moyenne du système catalytique exprimée en kilogramme de copolymère synthétisé par mole de métal néodyme et par heure (kg/mol.h).

Sauf indication contraire, la polymérisation est stoppée par dégazage du réacteur et ajout de l'agent de fonctionnalisation à 80°C après formation de 12 à 13 g de polymère. Les co-catalyseurs utilisés sont le butyloctylmagnésium (BOMAG), le phenyl-Mg-butyl, le mesityl-Mg-butyl, le triisopropylphenyl-Mg-butyl. Pour chacun des co-catalyseurs, l'activité catalytique du système catalytique est déterminée. Les résultats figurent dans le tableau 1. Les polymères synthétisés sont caractérisés par RMN du proton et du carbone 13 et par chromatographie à exclusion stérique (SEC). Les résultats figurent dans le tableau 2 (microstructure) et le tableau 3 (macrostructure).

Mode opératoire de fonctionnalisation :
Lorsque la conversion en monomères souhaitée est atteinte, le contenu du réacteur est dégazé puis 2 équivalents (par rapport au magnésium) de l'agent de fonctionnalisation, le (N,N-diméthyl-3-aminopropyl)méthyldiméthoxysilane, sont introduits sous atmosphère inerte par surpression. Le milieu réactionnel est agité pendant 60 minutes à 80°C. Après réaction, le milieu est dégazé puis précipité dans du méthanol. Les polymères sont remis en solution dans du toluène, puis précipité dans le méthanol de manière à éliminer les molécules « silane » non greffés, ce qui permet d'améliorer la qualité des signaux des spectres pour la quantification du taux de fonction et l'intégration des différents signaux. Le polymère est antioxydé puis séché à 60 °C sous vide jusqu'à masse constante. Il est ensuite analysé par SEC (THF), RMN ¹H, ¹³C, ²⁹Si. Les résultats figurent dans le tableau 4.

Résonance magnétique nucléaire (RMN) :
Tous les produits de fonctionnalisation des copolymères de l'éthylène et du 1,3-butadiène sont caractérisés par spectrométrie RMN ¹H, ¹³C, ²⁹Si. Les spectres RMN sont enregistrés sur un Spectromètre Brüker Avance III 500 MHz équipé d'une cryo-sonde « large bande » BBIz-grad 5 mm. L'expérience RMN ¹H quantitative, utilise une séquence simple impulsion 30° et un délai de répétition de 5 secondes entre chaque acquisition. 64 à 256 accumulations sont réalisées. L'expérience RMN ¹³C quantitative, utilise une séquence simple impulsion 30° avec un découplage proton et un délai de répétition de 10 secondes entre chaque acquisition. 1024 à 10240 accumulations sont réalisées. Les expériences bidimensionnelles ¹H/¹³C et ¹H/²⁹Si sont utilisées dans le but de déterminer la structure des polymères fonctionnels. La détermination de la microstructure des copolymères est définie dans la littérature, selon l'article de Llauro et al., Macromolecules 2001, 34, 6304-6311.

La structure chimique finale de chaque polymère fonctionnel est identifiée par RMN (¹H, ¹³C et ²⁹Si).

Chromatographie à exclusion de taille (SEC) :
a) Pour les copolymères solubles à température ambiante dans le tétrahydrofuranne (THF), on a déterminé les masses molaires par chromatographie d'exclusion stérique dans le THF. On a injecté les échantillons à l'aide d'un injecteur " Waters 717 " et d'une pompe " Waters 515 HPLC " à un débit de 1 ml.min⁻¹ dans une série de colonnes " Polymer Laboratories ".

Cette série de colonnes, placée dans une enceinte thermostatée à 45°C, est composée de :
- 1 précolonne PL Gel 5 µm,
- 2 colonnes PL Gel 5 µm Mixte C,
- 1 colonne PL Gel 5 µm-500 Å.

On a réalisé la détection à l'aide d'un réfractomètre " Waters 410 ".

On a déterminé les masses molaires par calibration universelle en utilisant des étalons de polystyrène certifiés par " Polymer Laboratories " et une double détection avec réfractomètre et couplage au viscosimètre.

Sans être une méthode absolue, la SEC permet d'appréhender la distribution des masses moléculaires d'un polymère. A partir de produits étalons commerciaux de type Polystyrène les différentes masses moyennes en nombre (Mn) et en poids (Mw) peuvent être déterminées et l'indice de polymolécularité calculé, également appelé dispersité (Ip = Mw/Mn).

b) Pour les copolymères insolubles à température ambiante dans le tétrahydrofuranne, les masses molaires ont été déterminées dans le 1,2,4- trichlorobenzène. On les a tout d'abord dissous à chaud (4 h 00 à 150°C), puis on les a injectés à 150°C avec un débit de 1 ml.min⁻¹ dans un chromatographe " Waters Alliance GPCV 2000 " équipé de trois colonnes " Styragel " (2 colonnes " HT6E " et 1 colonne " HT2 ").

On a effectué la détection à l'aide d'un réfractomètre " Waters ".

On a déterminé les masses molaires par calibration relative en utilisant des étalons polystyrène certifiés par " Polymer Laboratories ".

**Tableau 1**

| **Exemple** | **Co-catalyseur** | **Activité (Kg/mol.h)** |
|---|---|---|
| **1** | BOMAG | 125 |
| **2** | PhMgBu | 71 |
| **3** | MesMgBu | 143 |
| **4** | (iPr)3PhMgBu | 32 |

**Tableau 2**

| **Co-catalyseur** | **% Eth dans EBR (1)** | **% PB1,2/EBR (2)** | **% PB1,4/EBR (3)** | **% cycles/EBR (4)** |
|---|---|---|---|---|
| **BOMAG** | 80 | 4 | 4-5 | 11-12 |
| **PhMgBu** | 79 | 5 | 4 | 11 |
| **MesMgBu** | 76-78 | 5-6 | 5 | 11-13 |
| **(iPr)3PhMgBu** | 77 | 6 | 5 | 11 |

| | | | | |
|---|---|---|---|---|
| (1) taux molaire de motif (CH2-CH2) dans le copolymère (2) taux molaire de motif (CH2-C(CH=CH2)) dans le copolymère (3) taux molaire de motif (CH2-CH=CH-CH2) dans le copolymère (4) taux molaire de motif 1,2-cyclohexanediyle dans le copolymère. | | | | |

**Tableau 3**

| **Co-catalyseur** | **nMg (µmol) (1)** | **mpolymère (g) (2)** | **lp (3)** |
|---|---|---|---|
| **BOMAG** | 278 | 11.5 | 1.40 |
| **PhMgBu** | 282 | 13.4 | 1.41 |
| **MesMgBu** | 275 | 13.1 | 1.3 |
| **(iPr)3PhMgBu** | 293 | 2.2 | 1.51 |

| | | | |
|---|---|---|---|
| (1) nombre de moles de magnésium introduit dans le réacteur (2) masse de copolymère formé (3) indice de polymolécularité du copolymère. | | | |

**Tableau 4**

| **Co-catalyseur** | **Taux de fonction** |
|---|---|
| **BOMAG** | 45% |
| **PhMgBu** | 46% |
| **MesMgBu** | 57% |
| **(iPr)3PhMgBu** | 60% |

Les résultats consignés dans le tableau 4 montrent que les systèmes catalytiques selon l'invention (exemples 3 et 4) qui se distinguent de ceux de l'état de la technique par la présence dans le co-catalyseur d'un noyau benzénique disubstitué en ortho du magnésium permettent d'améliorer le taux de chaînes polymères fonctionnelles dans la réaction de fonctionnalisation de copolymère d'éthylène et de 1,3-diène. Il est obtenu un gain de 11% dans le rendement de la réaction de fonctionnalisation. Ces résultats sont obtenus alors même que la microstructure et la macrostructure (Ip) des polymères synthétisés dans les exemples 1 à 4 sont quasi identiques (tableaux 2 et 3).

Une amélioration du procédé de synthèse des polymères peut être aussi observée, lorsque les substituants du noyau benzénique en ortho du magnésium dans le composé diorganomagnésien asymétrique sont tous les deux différents d'un groupe isopropyle (tableau 1). En effet, l'activité catalytique dans l'exemple 3 est la plus forte : un gain d'au moins 10% est obtenu par rapport aux autres exemples.

En résumé, l'utilisation combinée du métallocène et du composé diorganomagnésien asymétrique tels que décrits selon les modes de réalisation de l'invention permet d'augmenter le taux de chaînes polymères fonctionnelles. Même l'activité catalytique dans la synthèse de polymères peut être aussi améliorée lorsque les substituants du noyau benzénique en ortho du magnésium dans le composé diorganomagnésien asymétrique sont tous les deux différents d'un groupe isopropyle.

## Revendications

1. Composé diorganomagnésien asymétrique de formule (I)
R^{B}-Mg-R^{A} (I)
R^{B} étant différent de R^{A},
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
R^{A} étant un alkyle, un cycloalkyle ou un benzyle, substitué ou non,
lequel composé diorganomagnésien est différent du n-butylmésitylmagnésium.

2. Composé diorganomagnésien asymétrique selon la revendication 1 dans lequel si l'un des 2 atomes de carbone du noyau benzénique de R^{B} en ortho du magnésium est substitué par un isopropyle, le deuxième atome de carbone du noyau benzénique de R^{B} en ortho du magnésium n'est pas substitué par un isopropyle.

3. Composé diorganomagnésien asymétrique selon la revendication 1 ou 2 dans lequel les atomes de carbone du noyau benzénique de R^{B} en ortho du magnésium sont substitués par un méthyle ou un éthyle, de préférence un méthyle.

4. Composé diorganomagnésien asymétrique selon l'une quelconque des revendications 1 à 3 dans lequel le composé diorganomagnésien est de formule (II) 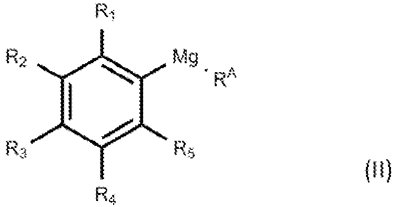 dans laquelle :
R₁ et R₅ représentent un méthyle ou un éthyle, de préférence un méthyle,
R₂, R₃ et R₄, identiques ou différents, représentent un atome d'hydrogène ou un alkyle,
R^{A} est un alkyle, un cycloalkyle ou un benzyle, substitué ou non.

5. Composé diorganomagnésien asymétrique selon la revendication 4 dans lequel R1, R3 et R5 sont identiques.

6. Composé diorganomagnésien asymétrique selon la revendication 4 ou 5 dans lequel R2 et R4 représentent un atome d'hydrogène.

7. Composé diorganomagnésien asymétrique selon l'une quelconque des revendications 1 à 6 dans lequel R^{A} représente un alkyle ayant de 2 à 10 atomes de carbone, de préférence de 2 à 8 atomes de carbone.

8. Composé diorganomagnésien asymétrique selon l'une quelconque des revendications 1 à 7 dans lequel R^{A} représente un alkyle linéaire.

9. Procédé de préparation d'un composé diorganomagnésien asymétrique de formule R^{B}-Mg-R^{A} qui comprend la mise en contact d'un composé organométallique de formule R^{A}M avec un organomagnésien de formule R^{B}-Mg-X et la réaction du composé organométallique de formule R^{A}M et de l'organomagnésien de formule R^{B}-Mg-X,
M représentant un atome de lithium, de sodium ou de potassium,
X représentant un groupe partant,
R^{B} et R^{A} étant tels que définis selon l'une quelconque des revendications 1 à 8,
lequel composé diorganomagnésien est différent du n-butylmésitylmagnésium.

10. Procédé selon la revendication 9 dans lequel X est un atome d'halogène.

11. Procédé selon l'une quelconque des revendications 9 à 10 dans lequel X est un atome de brome ou un atome de chlore, de préférence un atome de brome.

12. Procédé selon l'une quelconque des revendications 9 à 11 dans lequel M représente un atome de lithium.

## Patentansprüche

1. Unsymmetrische Diorganomagnesiumverbindung der Formel (I)
R^{B}-Mg-R^{A} (I)
wobei R^{B} von R^{A} verschieden ist,
wobei R^{B} einen durch das Magnesiumatom substituierten Benzolkern umfasst, wobei eines der Kohlenstoffatome des Benzolkerns in ortho-Position zu dem Magnesium durch ein Methyl, ein Ethyl oder ein Isopropyl substituiert ist oder mit dem Kohlenstoffatom, das sein nächster Nachbar ist und das in meta-Position zu dem Magnesium steht, einen Ring bildet, wobei das andere Kohlenstoffatom des Benzolkerns in ortho-Position zu dem Magnesium durch ein Methyl, ein Ethyl oder ein Isopropyl substituiert ist,
wobei R^{A} für Alkyl, Cycloalkyl oder Benzyl, das substituiert oder nicht ist, steht,
wobei die Diorganomagnesiumverbindung von n-Butylmesitylmagnesium verschieden ist.

2. Unsymmetrische Diorganomagnesiumverbindung nach Anspruch 1, wobei dann, wenn eines der 2 Kohlenstoffatome des Benzolkerns von R^{B} in ortho-Position zu dem Magnesium durch ein Isopropyl substituiert ist, das zweite Kohlenstoffatom des Benzolkerns von R^{B} in ortho-Position zu dem Magnesium nicht durch ein Isopropyl substituiert ist.

3. Unsymmetrische Diorganomagnesiumverbindung nach Anspruch 1 oder 2, wobei die Kohlenstoffatome des Benzolkerns von R^{B} in ortho-Position zu dem Magnesium durch ein Methyl oder ein Ethyl, vorzugsweise ein Methyl, substituiert sind.

4. Unsymmetrische Diorganomagnesiumverbindung nach einem der Ansprüche 1 bis 3, wobei die Diorganomagnesiumverbindung die Formel (II) aufweist: 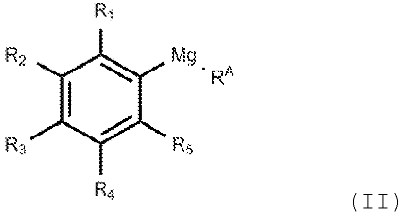 wobei:
R₁ und R₅ für ein Methyl oder ein Ethyl, vorzugsweise ein Methyl, stehen,
R₂, R₃ und R₄ gleich oder verschieden sind und für ein Wasserstoffatom oder ein Alkyl stehen,
R^{A} für Alkyl, Cycloalkyl oder Benzyl, das substituiert oder nicht ist, steht.

5. Unsymmetrische Diorganomagnesiumverbindung nach Anspruch 4, wobei R1, R3 und R5 gleich sind.

6. Unsymmetrische Diorganomagnesiumverbindung nach Anspruch 4 oder 5, wobei R2 und R4 für ein Wasserstoffatom stehen.

7. Unsymmetrische Diorganomagnesiumverbindung nach einem der Ansprüche 1 bis 6, wobei R^{A} für ein Alkyl mit 2 bis 10 Kohlenstoffatomen, vorzugsweise 2 bis 8 Kohlenstoffatomen, steht.

8. Unsymmetrische Diorganomagnesiumverbindung nach einem der Ansprüche 1 bis 7, wobei R^{A} für ein lineares Alkyl steht.

9. Verfahren zur Herstellung einer unsymmetrischen Diorganomagnesiumverbindung der Formel R^{B}-Mg-R^{A}, umfassend das Inkontaktbringen einer metallorganischen Verbindung der Formel R^{A}M mit einer Organomagnesiumverbindung der Formel R^{B}-Mg-X und das Umsetzen der metallorganischen Verbindung der Formel R^{A}M und der Organomagnesiumverbindung der Formel R^{B}-Mg-X,
wobei M für ein Lithium-, Natrium- oder Kaliumatom steht,
wobei X für eine Abgangsgruppe steht,
wobei R^{B} und R^{A} gemäß einem der Ansprüche 1 bis 8 definiert sind,
wobei die Diorganomagnesiumverbindung von n-Butylmesitylmagnesium verschieden ist.

10. Verfahren nach Anspruch 9, wobei X für ein Halogenatom steht.

11. Verfahren nach einem der Ansprüche 9 bis 10, wobei X für ein Bromatom oder ein Chloratom, vorzugsweise ein Bromatom, steht.

12. Verfahren nach einem der Ansprüche 9 bis 11, wobei M für ein Lithiumatom steht.

## Claims

1. Asymmetric diorganomagnesium compound of formula (I)
R^{B}-Mg-R^{A} (I)
R^{B} being different from R^{A},
R^{B} comprising a benzene nucleus substituted with a magnesium atom, one of the carbon atoms of the benzene nucleus ortho to the magnesium being substituted with a methyl, an ethyl, an isopropyl or forming a ring with the carbon atom which is its closest neighbour and which is meta to the magnesium, the other carbon atom of the benzene nucleus ortho to the magnesium being substituted with a methyl, an ethyl or an isopropyl,
R^{A} being an alkyl, a cycloalkyl or a benzyl that is substituted or unsubstituted,
which diorganomagnesium compound is other than n-butylmesitylmagnesium.

2. Asymmetric diorganomagnesium compound according to Claim 1, in which, if one of the two carbon atoms of the benzene nucleus of R^{B} ortho to the magnesium is substituted with an isopropyl, the second carbon atom of the benzene nucleus of R^{B} ortho to the magnesium is not substituted with an isopropyl.

3. Asymmetric diorganomagnesium compound according to Claim 1 or 2, in which the carbon atoms of the benzene nucleus of R^{B} ortho to the magnesium are substituted with a methyl or an ethyl, preferably a methyl.

4. Asymmetric diorganomagnesium compound according to any one of Claims 1 to 3, in which the diorganomagnesium compound is of formula (II) 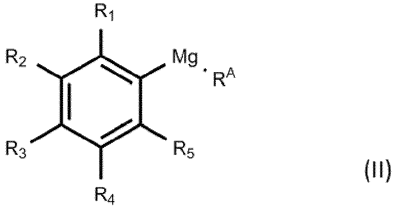 in which
R₁ and R₅ represent a methyl or an ethyl, preferably a methyl,
R₂, R₃ and R₄, which may be identical or different, represent a hydrogen atom or an alkyl,
R^{A} is an alkyl, a cycloalkyl or a benzyl that is substituted or unsubstituted.

5. Asymmetric diorganomagnesium compound according to Claim 4, in which R1, R3 and R5 are identical.

6. Asymmetric diorganomagnesium compound according to Claim 4 or 5, in which R2 and R4 represent a hydrogen atom.

7. Asymmetric diorganomagnesium compound according to any one of Claims 1 to 6, in which R^{A} represents an alkyl containing from 2 to 10 carbon atoms, preferably from 2 to 8 carbon atoms.

8. Asymmetric diorganomagnesium compound according to any one of Claims 1 to 7, in which R^{A} represents a linear alkyl.

9. Process for preparing an asymmetric diorganomagnesium compound of formula R^{B}-Mg-R^{A}, which comprises the placing in contact of an organometallic compound of formula R^{A}M with an organomagnesium agent of formula R^{B}-Mg-X and the reaction of the organometallic compound of formula R^{A}M and of the organomagnesium agent of formula R^{B}-Mg-X,
M representing a lithium, sodium or potassium atom,
X representing a leaving group,
R^{B} and R^{A} being as defined according to any one of Claims 1 to 8,
said diorganomagnesium compound being other than n-butylmesitylmagnesium.

10. Process according to Claim 9, in which X is a halogen atom.

11. Process according to either one of Claims 9 and 10, in which X is a bromine atom or a chlorine atom, preferably a bromine atom.

12. Process according to any one of Claims 9 to 11, in which M represents a lithium atom.
